# EUROPEAN PATENT APPLICATION

(11) **EP 1 437 554 A1**
(43) Date of publication of application: **14.07.2004**
(21) Application number: 02772908.6
(22) Date of filing: 25.09.2002
(51) Int. Cl.: F25B 13/00, F25B 41/04, F16K 31/06

(54) **SOLENOID VALVE CONTROL DEVICE AND AIR CONDITIONER PROVIDED WITH SOLENOID VALVE CONTROL DEVICE**

(30) Priority: 26.09.2001 JP 2001293885
(71) Applicant: Daikin Industries, Ltd., Osaka-shi, Osaka 530-8323 (JP); MATSUSHITA ELECTRIC INDUSTRIAL CO., LTD., Kadoma-shi, Osaka 571-8501 (JP)
(72) Inventor: MARUMO, Toshio, Kusatsu-shi, Shiga 525-0027 (JP); YABUKI, Toshio Shiga-seisakusho of DAIKIN IND. LTD, Kusatsu-shi, Shiga 525-0044 (JP); TOSHA, Teruo, Otsu-shi, Shiga 520-0861 (JP); MIZUTANI, Kazumi, Otsu-shi, Shiga 520-0112 (JP)
(74) Representative: HOFFMANN - EITLE
(86) International application number: PCT/JP2002/009848
(87) International publication number: WO 2003/027583

(57) **Abstract**

One end of a relay RY is connected to one end of the valve coil L1 of a 4-way switching solenoid valve, with a dc high voltage (DC280V) applied to the other end of the relay RY. The collector of.a transistor Q1 is connected via a diode D1 to one end of the valve coil L1, with a dc low voltage (DC16V) applied to the emitter of the transistor Q1. When the valve coil L1 is to be energized, a control unit 1 is used to turn on the relay RY and a dc high voltage is applied to the valve coil L1 via the relay RY and a positive temperature coefficient element PTC to thereby perform a switching operation. After the switching operation, the control unit 1 is used to turn on the transistor Q1 and then turn off the relay RY to apply a dc low voltage to the valve coil L1 via the transistor Q1, thereby enabling a hold operation. Accordingly, a solenoid valve control device capable of reducing power consumption with a simple structure, and an air conditioner provided with the solenoid valve control device are provided.

## Description

### TECHNICAL FIELD

The present invention relates to a solenoid valve control device for controlling switching operation of a solenoid valve as well as to an air conditioner provided with a solenoid valve control device.

### BACKGROUND ART

Conventionally, as the air conditioner provided with a solenoid valve control device, there has been provided one in which under cooling operation, a 4-way switching solenoid valve is in one switching position with a valve coil of the 4-way switching solenoid valve in a nonconductive state, while, under heating operation, the 4-way switching solenoid valve is switched to the other switching position by bringing the valve coil of the 4-way switching solenoid valve into conduction.

However, this air conditioner provided with the solenoid valve control device has a drawback of large electric power loss because the valve coil of the 4-way switching solenoid valve is normally kept conducting under heating operation.

### DISCLOSURE OF THE INVENTION

Accordingly, it is an object of the present invention to provide a solenoid valve control device which is reduced in power consumption with a simple construction, as well as an air conditioner provided with the solenoid valve control device.

In order to achieve the above object, according to the present invention, there is provided a solenoid valve control device for controlling switching operation of a solenoid valve by energizing a valve coil of the solenoid valve, the solenoid valve control device comprising:
first switch means having one end connected to the valve coil of the solenoid valve and the other end connected to a dc high voltage;
second switch means having one end connected to the valve coil of the solenoid valve and the other end connected to a dc low voltage; and
a control unit for controlling the first and second switch means so that when the valve coil of the solenoid valve is to be energized, the first switch means is turned on to perform a switching operation of the solenoid valve, and subsequent to the switching operation, after or generally simultaneously with turning on of the second switch means, the first switch means is turned off to perform a hold operation of the solenoid valve.

With this constitution, by the control unit, when the valve coil of the solenoid valve is to be energized, the first switch means is turned on so that dc high voltage is applied to the valve coil to perform a switching operation of the solenoid valve, and subsequent to the switching operation, after or generally simultaneously with turning on of second switch means, the first switch means is turned off so that a dc low voltage is applied to the valve coil via the second switch means to perform a hold operation of the solenoid valve. Therefore, the power consumption is reduced by applying to the valve coil a minimum necessary dc low voltage to allow the hold operation of the solenoid valve. Also, compared with latch type solenoid valves such as those in which the polarity of the applied voltage is inverted, the construction is simplified, so that a cost reduction is achieved.

In one embodiment, The solenoid valve control device has a positive temperature coefficient element connected between the valve coil of the solenoid valve and the first switch means.

In this embodiment, the more the flowing current increases, the more the positive temperature coefficient element increases in temperature, going higher in resistance so that the current flowing to the valve coil via the first switch means and the positive temperature coefficient element is limited by the positive temperature coefficient element even if the first switch means continuously remains in the on state. As a result, the current to the valve coil for the switching operation is controlled by the positive temperature coefficient element. Also, by the use of the positive temperature coefficient element, even if the dc high voltage applied to the valve coil is varied, the current flowing through the valve coil indeed increases with increasing voltage value of the dc high voltage, but the time for which a large current flows is short and the current changes to a small current in a short time, so that the electric power fed to the valve coil becomes generally constant and the solenoid valve is stabilized in operation. Therefore, by an optimum selection of the characteristics of the positive temperature coefficient element, there is no excessive power consumption involved in applying the dc high voltage to the valve coil, thus allowing the switching operation to be achieved with an appropriate power. Moreover, even if the first switch means fails and remains in the on state, the valve coil current is limited by the positive temperature coefficient element, by which the valve coil is prevented from damage.

Also, according to one aspect of the present invention, there is provided an air conditioner having a solenoid valve control device for controlling switching operation of a 4-way switching solenoid valve by energizing a valve coil of the 4-way switching solenoid valve under either cooling operation or heating operation, the air conditioner comprising:
first switch means having one end connected to the valve coil of the 4-way switching solenoid valve and the other end connected to a dc high voltage;
second switch means having one end connected to the valve coil of the 4-way switching solenoid valve and the other end connected to a dc low voltage; and
a control unit for controlling the first and second switch means so that when the valve coil (L1) of the 4-way switching solenoid valve is to be energized, the first switch means is turned on to perform a switching operation of the solenoid valve, and subsequent to the switching operation, after or generally simultaneously with turning on of the second switch means, the first switch means is turned off to perform a hold operation.

With this constitution, by the control unit, when the valve coil of the 4-way switching solenoid valve is to be energized, the first switch means is turned on so that a dc high voltage is applied to the valve coil to perform a switching operation of the 4-way switching solenoid valve, and subsequent to the switching operation, after or generally simultaneously with turning on of the second switch means, the first switch means is turned off so that a dc low voltage is applied to the valve coil via the second switch means to perform a hold operation of the 4-way switching solenoid valve. Therefore, the power consumption is reduced by applying to the valve coil a minimum necessary dc low voltage to allow the hold operation of the solenoid valve. Also, compared with latch type solenoid valves such as those in which the polarity of the applied voltage is inverted, the construction is simplified, so that a cost reduction is achieved.

Also, in one embodiment, the dc high voltage is an inverter-driving use dc high voltage fed from an inverter-use power supply section for driving a compressor of the air conditioner; and
the dc low voltage is a control-use dc low voltage fed from a control-use power supply section of the air conditioner.

In this embodiment, since the dc high voltage is fed from the inverter-use power supply section for driving the compressor of the air conditioner and since the dc low voltage is fed from the control-use power supply section of the air conditioner, there is no need for additionally providing a solenoid-valve driving use power supply, so that a cost reduction is achieved.

Also, in one embodiment, a positive temperature coefficient element is connected between the valve coil of the 4-way switching solenoid valve and the first switch means.

In this embodiment, the more the flowing current increases, the more the positive temperature coefficient element increases in temperature, going higher in resistance so that the current flowing to the valve coil via the first switch means and the positive temperature coefficient element is limited by the positive temperature coefficient element even if the first switch means continuously remains in the on state. As a result, the current to the valve coil for the switching operation is limited by the positive temperature coefficient element. Also, by the use of the positive temperature coefficient element, even if the dc high voltage applied to the valve coil is varied, the current flowing through the valve coil indeed increases with increasing voltage value of the dc high voltage, but the time for which a large current flows is short and the current changes to a small current in a short time, so that the electric power fed to the valve coil becomes generally constant and the 4-way switching solenoid valve is stabilized in operation. Therefore, by an optimum selection of the characteristics of the positive temperature coefficient element, there is no excessive power consumption involved in applying the dc high voltage to the valve coil, thus allowing the switching operation to be achieved with an appropriate power. Moreover, even if the first switch means fails and remains in the on state, the valve coil current is limited by the positive temperature coefficient element, by which the valve coil is prevented from damage.

### BRIEF DESCRIPTION OF THE DRAWINGS

Fig. 1 is an outlined block diagram of an air conditioner provided with a solenoid valve control device which is an embodiment of the present invention;
Fig. 2 is a schematic view of a 4-way switching solenoid valve which is controlled by the air conditioner provided with the solenoid valve control device;
Fig. 3 is a chart showing transitions of the valve coil voltage during the operation of the air conditioner provided with the solenoid valve control device; and
Fig. 4 is a chart showing transitions of the valve coil current during the operation of the air conditioner provided with the solenoid valve control device.

### BEST MODE FOR CARRYING OUT THE INVENTION

Hereinbelow, the solenoid valve control device of the present invention as well as the air conditioner provided with the solenoid valve control device are described in detail by way of embodiments portions with reference to the accompanying drawings.

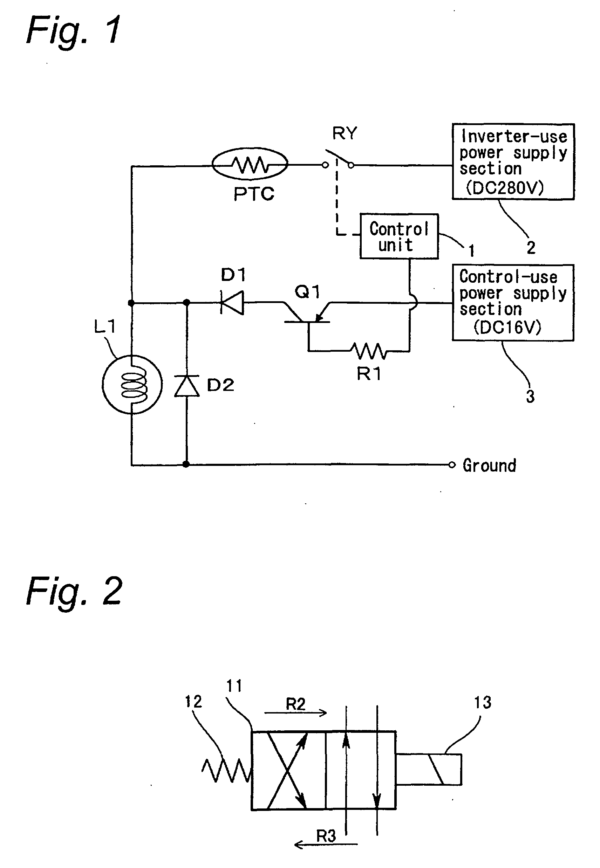

Fig. 1 is an outlined block diagram of an air conditioner provided with a solenoid valve control device which is an embodiment of the invention. As shown in Fig. 1, the air conditioner provided with the solenoid valve control device includes a positive temperature coefficient element PTC whose one end is connected to one end of a valve coil L1 of a 4-way switching solenoid valve (not shown), a relay RY as a first switch means whose one end is connected to the other end of the positive temperature coefficient element PTC, a diode D1 whose cathode is connected to one end of the valve coil L1, a transistor Q1 as a second switch means whose collector is connected to the anode of the diode D1, and a control unit 1 for outputting a control signal to the relay RY and further outputting a control signal to the base of the transistor Q1 via a resistor R1.

A dc high voltage (DC 280 V) derived from an inverter-use power supply section 2 dedicated to an inverter circuit (not shown) that drives a compressor of the air conditioner is applied to the other end of the relay RY, while a dc low voltage (DC 16 V) derived from a control-use power supply 3 for the inverter circuit of the air conditioner is applied to the emitter of the transistor Q1. In addition, the other end of the valve coil L1 of the 4-way switching solenoid valve (not shown) is connected to the ground. Also, an inverse-voltage prevention diode D2 is connected to both ends of the valve coil L1 (with the cathode of the diode D2 being connected to a PTC-side one end of the valve coil L1, and with the anode being connected to the ground-side other end of the valve coil L1).

Fig. 2 is a schematic view of a 4-way switching solenoid valve to be used in this air conditioner provided with the solenoid valve control device. This 4-way switching solenoid valve, as shown in Fig. 2, includes a valve element 11 of the 4-port, 2-position type, a spring 12 for biasing the valve element 11 in a direction of arrow R2, and a valve coil 13 for sliding the valve element 11 in a direction of arrow R3 for conduction.

In the air conditioner provided with the solenoid valve control device and constructed as described above, it is assumed that, under cooling operation, the valve element 11 is biased in the direction of arrow R2 by the spring 12, both the relay RY and the transistor Q1 are in the off state, and the 4-way switching solenoid valve is in one switching position as shown in Fig. 2. Next, in switching from cooling operation to heating operation, the relay RY is turned on by the control unit 1 shown in Fig. 1, the dc high voltage of DC 280 V is applied from the inverter-use power supply section 2 via the relay RY and the positive temperature coefficient element PTC to the valve coil L1. As a result, the valve element 11 is slid in the direction of arrow R3 by the valve coil 13 shown in Fig. 2, causing the 4-way switching solenoid valve (shown in Fig. 2) to be switched to the other switching position. Then, the relay RY, after kept turned-on for about 3 seconds, is turned off. Before this relay RY is turned off, the control unit 1 turns on the transistor Q1, by which the dc low voltage of 16 V DC, after the turn-off of the relay RY, is applied from the control-use power supply 3 via the transistor Q1 and the diode D1 to the valve coil L1. As a result of this, the 4-way switching solenoid valve (shown in Fig. 2) is held in the other switching position.

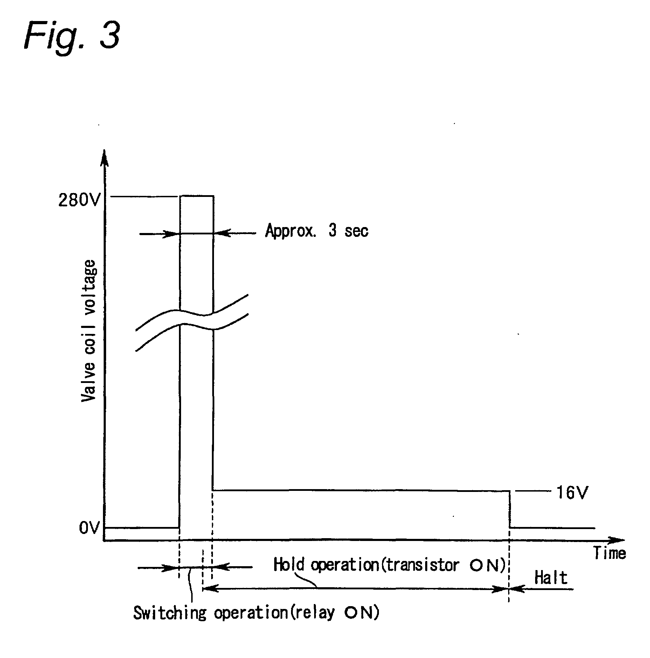

Fig. 3 shows transitions of the valve coil voltage during the operation of the air conditioner provided with the solenoid valve control device. It is noted that Fig. 3 gives an expression of valve coil voltage, but actually represents an applied voltage across the series-connection of the positive temperature coefficient element PTC and the valve coil L1. As shown in Fig. 3, the valve coil voltage becomes DC 280 V while the relay RY is kept on for about 3 seconds, and the valve coil voltage becomes DC 16 V when the relay RY is turned off. That is, the transistor Q1 is turned on a specified time before the relay RY is turned off, so that the valve coil voltage does not become 0 V even without the supply of DC 280 V.

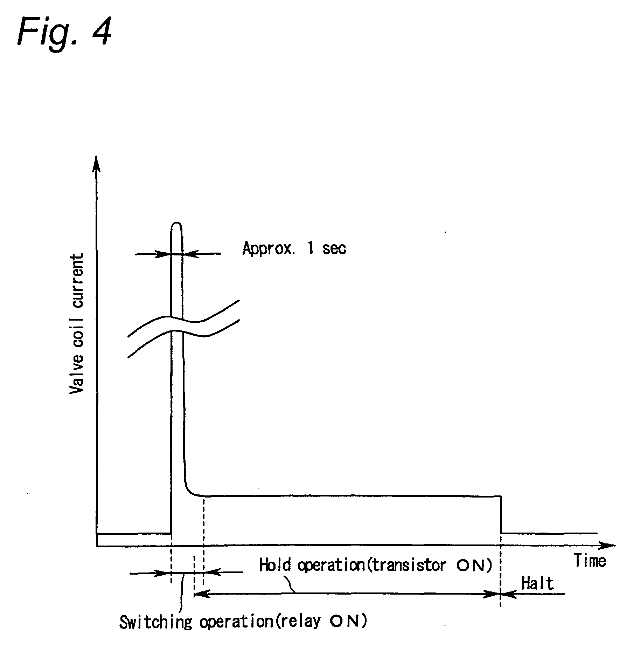

Fig. 4 shows transitions of the valve coil current during the operation of the air conditioner provided with the solenoid valve control device. As shown in Fig. 4, the valve coil current increases in value when the relay RY is turned on, where the more the flowing current increases, the more the positive temperature coefficient element PTC increases in temperature, going higher in resistance so that the current value is limited to a value close to the current of hold operation before the relay RY is turned off. In the case of Fig. 4, the current flowing through the valve coil L1 has come to a value close to the current of hold operation in about 1 second since the turn-on of the relay RY.

As shown above, when the valve coil L1 of the 4-way switching solenoid valve is to be energized, the relay RY is turned on so that a dc high voltage is applied to the valve coil L1, making the 4-way switching solenoid valve switched over, and after this switching operation, the transistor Q1 is turned on and then the relay RY is turned off, so that a dc low voltage is applied to the valve coil L1 via the transistor Q1 and the diode D1, thus holding the 4-way switching solenoid valve. By doing so, a dc low voltage is applied to the valve coil L1 under hold operation, so that the power consumption is reduced. Also, compared with latch type solenoid valves such as those in which the polarity of the applied voltage is inverted, the construction is simplified, so that a cost reduction is achieved.

Further, since a dc high voltage (DC 280 V) is fed from the inverter-use power supply section 2 operative for driving the compressor of the air conditioner, and since a dc low voltage (DC 16 V) is fed from the control-use power supply section 3 of the air conditioner, there is no need for preparing any additional solenoid-valve driving use power supply, so that a cost reduction is achieved.

Furthermore, by the use of the positive temperature coefficient element PTC, the electric power supplied to the valve coil L1 is kept generally constant even if the dc high voltage is varied, so that the operation of the 4-way switching solenoid valve is stabilized. Also, by setting the positive temperature coefficient element PTC to optimum characteristics, there is no excessive power consumption involved in applying the dc high voltage to the valve coil L1, thus allowing the switching operation to be achieved with an appropriate power. Moreover, even if the relay RY fails and remains in the on state, the current flowing through the valve coil L1 is limited by the positive temperature coefficient element PTC, by which the valve coil L1 is prevented from damage.

The above embodiment has been described about an air conditioner provided with the solenoid valve control device. However, the solenoid valve control device of the present invention is not limited to air conditioners, but may be applied to other devices using solenoid valves.

Also, although a thermistor is employed as the positive temperature coefficient element in the above embodiment, other positive temperature coefficient elements may also be employed.

In the above embodiment, the 4-way switching solenoid valve is switched over by energizing the valve coil L1 of the 4-way switching solenoid valve under heating operation. However, it is of course allowable that the 4-way switching solenoid valve is switched over by energizing the valve coil of the 4-way switching solenoid valve under cooling operation.

A dc low voltage (DC 16 V) derived from the control-use power supply 3 for the inverter circuit of the air conditioner is employed as the dc low voltage to be applied to the valve coil L1 in the above embodiment. However, the dc low voltage is not limited to this, and a dc low voltage derived from other control-use power supply provided in the air conditioner may also be used.

Further, subsequent to the switching operation of the 4-way switching solenoid valve, the transistor Q1 is turned on before the relay RY is turned off, in the above embodiment. However, the relay RY may be turned off nearly simultaneously when the transistor Q1 is turned on subsequent to the switching operation.

## Claims

1. A solenoid valve control device for controlling switching operation of a solenoid valve by energizing a valve coil (L1) of the solenoid valve, the solenoid valve control device comprising:
first switch means (RY) having one end connected to the valve coil (L1) of the solenoid valve and the other end connected to a dc high voltage;
second switch means (Q1) having one end connected to the valve coil (L1) of the solenoid valve and the other end connected to a dc low voltage; and
a control unit (1) for controlling the first and second switch means (RY, Q1) so that when the valve coil (L1) of the solenoid valve is to be energized, the first switch means (RY) is turned on to perform a switching operation of the solenoid valve, and subsequent to the switching operation, after or generally simultaneously with turning on of the second switch means (Q1), the first switch means (RY) is turned off to perform a hold operation.

2. The solenoid valve control device according to Claim 1, further comprising
a positive temperature coefficient element (PTC) connected between the valve coil (L1) of the solenoid valve and the first switch means (RY).

3. An air conditioner having a solenoid valve control device for controlling switching operation of a 4-way switching solenoid valve by energizing a valve coil (L1) of the 4-way switching solenoid valve under either cooling operation or heating operation, the air conditioner comprising:
first switch means (RY) having one end connected to the valve coil (L1) of the 4-way switching solenoid valve and the other end connected to a dc high voltage;
second switch means (Q1) having one end connected to the valve coil (L1) of the 4-way switching solenoid valve and the other end connected to a dc low voltage; and
a control unit (1) for controlling the first and second switch means (RY, Q1) so that when the valve coil (L1) of the 4-way switching solenoid valve is to be energized, the first switch means (RY) is turned on to perform a switching operation of the solenoid valve, and subsequent to the switching operation, after or generally simultaneously with turning on of the second switch means (Q1), the first switch means (RY) is turned off to perform a hold operation of the solenoid valve.

4. The air conditioner having the solenoid valve control device according to Claim 3, wherein
the dc high voltage is an inverter-driving use dc high voltage fed from an inverter-use power supply section (2) for driving a compressor of the air conditioner; and
the dc low voltage is a control-use dc low voltage fed from a control-use power supply section (3) of the air conditioner.

5. The air conditioner having the solenoid valve control device according to Claims 3 or 4, further comprising
a positive temperature coefficient element (PTC) connected between the valve coil (L1) of the 4-way switching solenoid valve and the first switch means (RY).
